# EUROPEAN PATENT SPECIFICATION

(11) **EP 0 451 387 B1**
(45) Date of publication and mention of the grant of the patent: **22.06.1994**
(21) Application number: 90303899.0
(22) Date of filing: 11.04.1990
(51) Int. Cl.: A01M 7/00, B05B 15/08

(54) **Liquid delivery equipment**
Gerät zum Ausbringen von Flüssigkeit
Dispositif pour délivrer du liquide

(43) Date of publication of application: 16.10.1991
(73) Proprietor: NOMIX-CHIPMAN LIMITED, Staple Hill, Bristol BS16 4PS (GB)
(72) Inventor: Eren, Ali, Bristol BS8 1AP (GB)
(74) Representative: Cheyne, John Robert Alexander Mackenzie

(56) References cited:
- EP-A- 36 287
- EP-A- 0 300 762
- DE-A- 1 904 374
- DE-A- 3 327 786
- FR-A- 2 362 673
- GB-A- 709 151
- US-A- 2 240 392
- US-A- 3 893 630
- US-A- 4 394 969

## Description

This invention relates to liquid delivery equipment and is particularly, although not exclusively, concerned with applicators for distributing agrochemicals such as herbicide.

Herbicide applicators are known which comprise a handset from which extends a support tube carrying a delivery head at the end away from the handset. The delivery head has means, such as a spinning disc, for distributing the herbicide. Such an arrangement is disclosed in EP-A-300762.

It is desirable for the spinning disc to rotate about a generally vertical axis. However, if the distribution head is mounted rigidly on the support tube, it is not possible to maintain this vertical orientation of the spinning disc axis as the delivery head is raised and lowered to dispense herbicide at different heights. Thus, for example, if the orientation of the delivery head is set so as to be appropriate for distributing herbicide over weeds at ground level, the orientation of the axis of the spinning disc will be incorrect when distributing herbicide over plants at, for example, waist level.

It is known to mount the delivery head pivotably on a support tube by means of a crude pivot and butterfly nut connection. Herbicide is then supplied from the handset through the support tube to the delivery head through a flexible tube which extends from the support tube to the delivery head on the outside of the equipment, the flexibility of the tube permitting pivotal adjustment of the distribution head. However, the unprotected flexible tube is exposed to damage, and also makes it difficult to achieve a clean, integrated design of the distribution head.

EP-A-036287 discloses liquid delivery equipment in the form of a fire fighting cannon comprising a support member carrying a delivery head, the delivery head being mounted on the support member for pivotal movement about a pivot axis, for adjustment of the direction of discharge of liquid from the delivery head relatively to the support member, the support member comprising a housing which is provided with an aperture in which the delivery head is situated, the delivery head having a peripheral surface region which is configured so that it cooperates with the periphery of the aperture in all operative angular positions of the delivery head relatively to the housing, the delivery head thereby forming a permanent closure of the aperture during operation of the equipment.

According to the present invention, the pivotal support of the delivery head within the aperture is accomplished at least partly by a connector element through which liquid is conveyed from the support member to the delivery head.

In a preferred embodiment, the delivery head is supported on one side by the connector element and on the opposite side by a further support element. The connector element preferably has a first part which engages the delivery head and extends parallel to the pivotal axis, and a second part which extends perpendicular to the pivotal axis. To support the delivery head, the connector element may be received in an opening in the delivery head.

It is desirable for an operator to be able to determine visually whether or not liquid is flowing to the delivery head. For this purpose, the connector element may be made from transparent material, or include a transparent portion, which is exposed to the outside of the equipment, so that an operator can determine whether or not liquid is flowing through the connector element.

An appropriately positioned aperture may be provided in the housing to expose the connector element if it is transparent, or has a transparent portion. The housing may also accommodate a metering valve for controlling the flow of liquid to the delivery head, and a calibration vessel for use in checking the output from the metering valve.

The delivery head may be provided with a spinning disc for distributing the liquid, and may accommodate and electric motor for driving the spinning disc.

For a better understanding of the present invention, and to show how it may be carried into effect, reference will now be made, by way of example, to the accompanying drawings, in which:

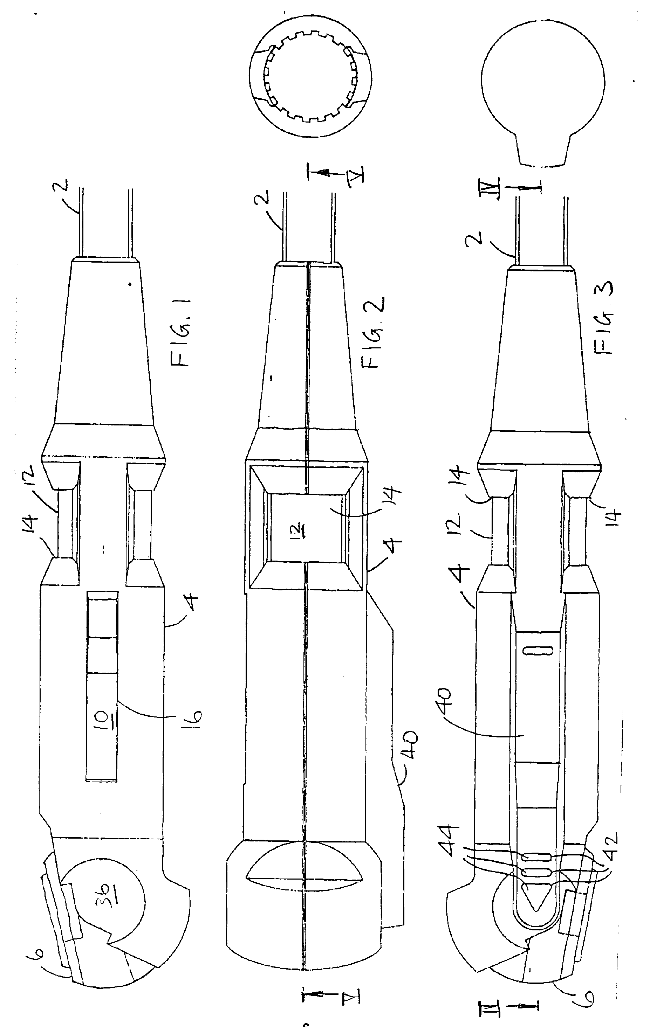

Figure 1 is a side view of a delivery assembly of a herbicide applicator;
Figure 2 is a top view of the delivery assembly shown in Figure 1;
Figure 3 shows the other side of the delivery assembly of Figure 1;

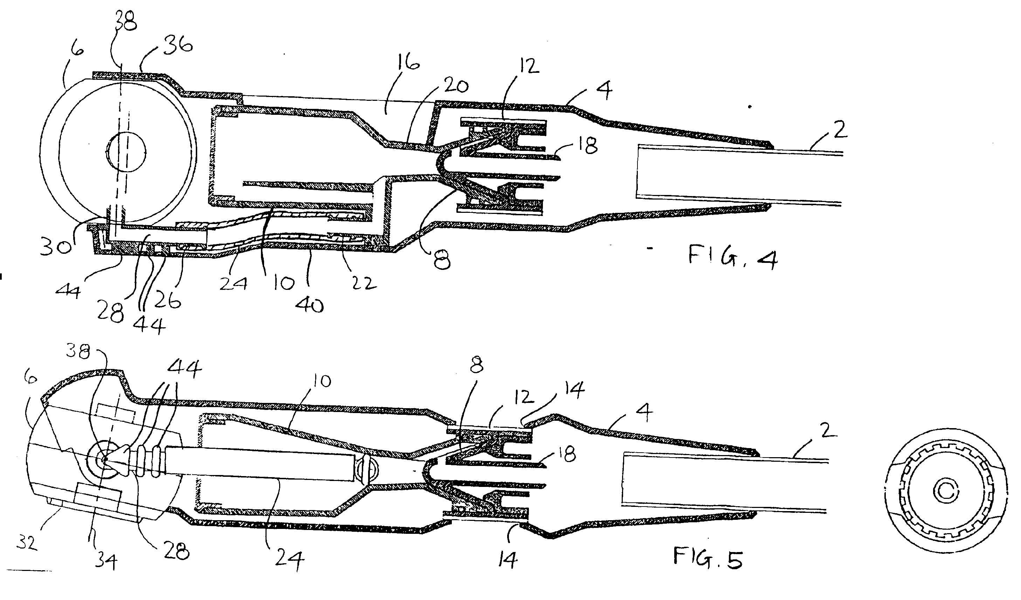

Figure 4 is a sectional view taken on the line IV-IV in Figure 3; and
Figure 5 is a sectional view taken on the line V-V in Figure 2.

The assembly shown in the Figures is mounted on the end of a support tube 2. At the opposite end of the support tube, there is a handset (not shown) to enable the equipment to be carried by a pedestrian operator. Equipment of this kind is shown, by way of example, in British Patent Application No. 8903243.7. The assembly comprises a housing 4 which is secured at one end to the support tube 2 and which carries, at the other end, a delivery head 6. The housing also accommodates a metering valve 8 and a calibration vessel 10. The metering valve 8 is adjustable manually by means of a knurled ring 12 which is accessible through openings 14 on opposite sides of the housing 4. A further opening 16 is provided in the housing, through which part of the wall of the calibration vessel 10 is visible, the calibration vessel 10 itself being made from transparent material.

The metering valve 8 has an inlet spigot 18 on which is fitted a supply tube (not shown) which extends from the handset through the support tube 2. The outlet 20 of the metering valve 8 opens into the calibration vessel 10. The calibration vessel 10 itself has an outlet spigot 22 which is connected by a flexible tube 24 to an inlet spigot 26 of a connector element 28. The connector element 28 has an outlet spigot 30 which is received in an opening in the delivery head 6. The delivery head 6 has internal passageways which provide communication between the connector element 28 and an outlet (not shown) in a face 32 of the delivery head 6.

The delivery head 6 accommodates an electric motor (not shown) which drives a spinning disc, situated adjacent the face 32, about an axis 34.

On the side of the delivery head 6 away from the connector element 28, a portion 36 of the wall of the housing 4 is provided with a boss (not shown) which engages a recess in the delivery head 6. The spigot 30 and the boss on the wall portion 36 thus support the delivery head 6 within the housing 4 for pivotal movement about an axis 38, which axis is perpendicular to the axis 34.

The connector element 28 and the flexible tube 24 are accommodated within a projecting region 40 of the housing 4. This region 40 is disposed on the opposite side of the housing 4 from the window 16. Apertures 42 are provided in the projecting region 40, and these apertures receive projections 44 formed on the connector element 28. The connector element 28 is made from a transparent or translucent material.

In use, herbicide flows from the handset through the flexible tube provided in the support tube 2 to the spigot 18 of the metering valve 8. The flow rate through the metering valve 8 is regulated by appropriate adjustment of the ring 12, so that the herbicide flows, at a desired flow rate, through the calibration vessel 10 and the flexible tube 24 to the connector element 28. From the connector element 28, the herbicide flows into the delivery head 6 to be discharged over the plants to be treated by the spinning disc rotating about the axis 34. If it is desired to check the flow rate of herbicide to the delivery head 6, this can be done by operating the equipment for a predetermined time and establishing the volume of herbicide which enters the calibration vessel 10.

It will be appreciated that the equipment would be held by an operator with the support tube 2 extending obliquely downwardly from the operator's hand so that the delivery head 6 is situated close to the plant to be treated. If the plant to be treated is at a relatively high level, the support tube 2 may be almost horizontal, in which case an orientation of the delivery head 6 as shown in Figure 5 would be appropriate. However, if the plant to be treated is nearer the ground, the support tube 2 would be more nearly vertical, and it would be appropriate for the delivery head to be pivoted relatively to the housing 4 in the clockwise direction from the position shown in Figure 5. This can be achieved simply by pivoting the delivery head 6 manually about the axis 38, this movement being permitted by the pivotal support provided by the outlet spigot 30 of the connector 28 and the boss on the wall portion 36. Adequate sealing is provided between the outlet spigot 30 and the recess in the delivery head, to prevent leakage of herbicide at this point. Also, some frictional resistance to pivoting is provided, to ensure that the delivery head 6 remains in the position in which it is set.

## Claims

1. Liquid delivery equipment comprising a support member (4) carrying a delivery head (6), the delivery head (6) being mounted on the support member (4) for pivotal movement about a pivot axis (38), for adjustment of the direction of discharge of liquid from the delivery head (6) relatively to the support member (4), the support member (4) comprising a housing which is provided with an aperture in which the delivery head (6) is situated, the delivery head (6) having a peripheral surface region which is configured so that it cooperates with the periphery of the aperture in all operative angular positions of the delivery head (6) relatively to the housing, the delivery head (6) thereby forming a permanent closure of the aperture during operation of the equipment, characterized in that pivotal support of the delivery head (6) within the aperture is accomplished at least partly by a connector element (28) through which liquid is conveyed from the support member (4) to the delivery head (6).

2. Equipment as claimed in claim 1, characterised in that the delivery head (6) is supported by the connector element (28) on one side and by a further support element on the opposite side.

3. Equipment as claimed in claim 1 or 2, characterised in that the connector element (28) has a first part extending parallel to the pivot axis and a second part extending perpendicular to the pivot axis.

4. Equipment as claimed in any one of the preceding claims, characterised in that the connector element (28) engages an opening in the delivery head (6) to provide pivotal support for the delivery head (6).

5. Equipment as claimed in any one of the preceding claims, characterised in that the connector element (28) has a transparent region which is exposed through the housing for providing a visual indication of flow of liquid through the connector element (28).

6. Equipment as claimed in any preceding claim, in which the housing accommodates a metering valve (8) and a calibration vessel (10).

7. Equipment as claimed in any one of the preceding claims, characterised in that the delivery head (6) accommodates an electric motor for driving a distribution element fitted to the delivery head (6).

8. Equipment as claimed in any one of the preceding claims, characterised in that the peripheral surface region is past-spherical, having a centre of curvature which lies on the pivot axis (38).

9. Equipment as claimed in any one of the preceding claims, characterised in that the connector element (28) is connected to a supply tube by passageways (24, 22, 18) disposed within the housing.

## Patentansprüche

1. Gerät zum Ausbringen von Flüssigkeit, beinhaltend
ein Trageglied (4), das einen Verteilerkopf (6) trägt, wobei der Verteilerkopf (6) so auf dem Trageglied (4) befestigt ist, daß er um eine Drehachse (38) geschwenkt werden kann, daß die Richtung des Flüssigkeitsauslaß aus dem Verteilerkopf (6) in bezug auf das Trageglied (4) eingestellt werden kann,
wobei das Trageglied (4) ein Gehäuse besitzt, das eine Öffnung aufweist, in der der Verteilerkopf (6) angeordnet ist,
der Verteilerkopf (6) einen Umfangsflächenschnitt hat, der so gestaltet ist, daß er mit dem Umfang der Öffnung in allen operativen Winkelstellungen des Verteilerkopfs (6) bezüglich des Gehäuses kooperiert,
der Verteilerkopf (6) bei Betrieb des Gerätes somit einen ständigen Verschluß der Öffnung bildet, dadurch gekennzeichnet, daß die Drehhalterung des Verteilerkopfs (6) innerhalb der Öffnung durch mindestens teilweise ein Verbindungsbauteil (28), durch das Flüssigkeit aus dem Trageglied (4) zum Verteilerkopf (6) geleitet wird, erfolgt.

2. Gerät nach Anspruch 1, dadurch gekennzeichnet, daß der Verteilerkopf (6) von dem Verbindungsbauteil (28) auf einer Seite gehalten ist und zudem durch ein Halterungsbauteil auf der gegenüberliegenden Seite.

3. Gerät nach Anspruch 1 oder 2, dadurch gekennzeichnet, daß das Verbindungsbauteil (28) ein erstes Teil hat, das parallel zur Drehachse verläuft und ein zweites Teil, das senkrecht zur Drehachse steht.

4. Gerät nach irgendeinem der vorhergehenden Ansprüche, dadurch gekennzeichnet, daß das Verbindungsbauteil (28) mit einer Öffnung im Verteilerkopf (6) eingreift, so daß eine Drehhalterung für den Verteilerkopf (6) besteht.

5. Gerät nach irgendeinem der vorhergehenden Ansprüche, dadurch gekennzeichnet, daß das Verbindungsbauteil (28) einen transparenten Bereich hat, der durch das Gehäuse freiliegt, so daß eine Sichtanzeige für den Flüssigkeitsfluß durch das Verbindungsbauteil (28) besteht.

6. Gerät nach irgendeinem vorhergehenden Anspruch, wobei das Gehäuse ein Meßventil (8) und ein Kalibriergefäß (10) beinhaltet.

7. Gerät nach irgendeinem der vorhergehenden Ansprüche, dadurch gekennzeichent, daß der Verteilerkopf (6) einen Elektromotor zum Antrieb des Verteilerbauteils, das am Verteilerkopf (6) befestigt ist, enthält.

8. Gerät nach irgendeinem der vorhergehenden Ansprüche, dadurch gekennzeichnet, daß der Umfangsflächenbereich teilweise gekrümmt ist, wobei das Krümmungszentrum auf der Drehachse (38) liegt.

9. Gerät nach irgendeinem der vorhergehenden Ansprüch, dadurch gekennzeichnet, daß das Verbindungsbauteil (28) durch Durchlässe (24, 22, 18), die im Gehäuse angeordnet sind, mit einer Versorgungsleitung verbunden ist.

## Revendications

1. Dispositif pour délivrer du liquide comprenant un élément de support (4) portant une tête de distribution (6), la tête de distribution (6) étant montée sur l'élément de support (4) en vue d'un mouvement de pivotement autour d'un axe de pivotement (38), pour le réglage de la direction de décharge du liquide de la tete de distribution (6) à l'élément de support (4), l'élément de support (4) comprenant un boîtier qui présente une ouverture dans laquelle est placée la tête de distribution (6), la tete de distribution (6) ayant une zone de surface périphérique qui est configurée pour coopérer avec la périphérie de l'ouverture dans toutes les positions angulaires de fonctionnement de la tête de distribution (6) par rapport au boîtier, la tête de distribution (6) obturant ainsi de manière permanente l'ouverture pendant le fonctionnement du dispositif, caractérisé en ce que le support pivotant de la tête de distribution (6) à l'intérieur de l'ouverture est effectué au moins en partie à l'aide d'un élément formant connecteur (28) par l'intermédiaire duquel du liquide est transporté de l'élément de support (4) à la tete de distribution (6).

2. Dispositif comme revendiqué à la revendication 1, caractérisé en ce que la tete de distribution (6) est supportée, d'un côté, par l'élément formant connecteur (28) et, du côté opposé, par un élément de support supplémentaire.

3. Dispositif comme revendiqué à la revendication 1 ou 2, caractérisé en ce que l'élément formant connecteur (28) a une première partie s'étendant parallèlement à l'axe de pivotement et une seconde partie s'étendant perpendiculairement à l'axe de pivotement.

4. Dispositif comme revendiqué à une quelconque des revendications précédentes, caractérisé en ce que l'élément formant connecteur (28) s'engage dans une ouverture de la tête de distribution (6) afin d'assurer un support pivotant pour la tête de distribution (6).

5. Dispositif comme revendiqué à une quelconque des revendications précédentes, caractérisé en ce que l'élément formant connecteur (28) a une zone transparente qui est visible à travers le boîtier pour assurer une indication visuelle de l'écoulement de liquide à travers l'élément formant connecteur (28).

6. Dispositif comme revendiqué à une quelconque des revendications précédentes, dans lequel le boîtier permet la mise en place d'une vanne de mesure (8) et d'un récipient de calibrage (10).

7. Dispositif comme revendiqué à une quelconque des revendications précédentes, caractérisé en ce que la tête de distribution (6) permet la mise en place d'un moteur électrique pour l'entraînement d'un élément de répartition placé dans la tête de distribution (6).

8. Dispositif comme revendiqué à une quelconque des revendications précédentes, caractérisé en ce que la zone de surface périphérique dépasse la sphère, en présentant un centre de courbure qui se trouve sur l'axe de pivotement (38).

9. Dispositif comme revendiqué à une quelconque des revendications précédentes, caractérisé en ce que l'élément formant connecteur (28) est relié à un tube d'alimentation par des passages (24, 22, 18) placés à l'intérieur du boîtier.
